# EUROPEAN PATENT SPECIFICATION

(11) **EP 2 615 755 B1**
(45) Date of publication and mention of the grant of the patent: **10.05.2017**
(21) Application number: 12150879.0
(22) Date of filing: 12.01.2012
(51) Int. Cl.: H04J 14/02

(54) **Optical switching node for a WDM optical network**
Optischer Vermittlungsknoten für ein optisches WDM-Netzwerk
Noeud de commutation optique pour un réseau optique WDM

(43) Date of publication of application: 17.07.2013
(73) Proprietor: ALCATEL LUCENT, 92100 Boulogne-Billancourt (FR)
(72) Inventor: Zami, Thierry, 91620 NOZAY (FR)
(74) Representative: Berthier, Karine

(56) References cited:
- WO-A1-2011/044371
- WO-A2-2008/112202
- US-A1- 2009 232 497
- US-A1- 2011 076 016
- US-A1- 2011 085 801
- S. GRINGERI ET AL.: "Flexible Architectures for Optical Transport nodes and Networks", IEEE COMMUNICATIONS MAGAZINE, July 2010 (2010-07), pages 40-50, XP002677846,
- ISHII K ET AL: "Development of Hierarchical Optical Path Cross-Connect Systems Employing Wavelength/Waveband Selective Switches", IEEE/OSA JOURNAL OF OPTICAL COMMUNICATIONS AND NETWORKING, IEEE, USA, vol. 3, no. 7, 1 July 2011 (2011-07-01), pages 559-567, XP011360007, ISSN: 1943-0620, DOI: 10.1364/JOCN.3.000559

## Description

### Field of the invention

The invention relates to the technical field of optical communication systems; in particular to network elements such as add devices, drop devices and transparent switching nodes for WDM networks.

### Background

Wavelength division multiplexing (WDM) transmission technology is a major factor in meeting the increasing needs of data transfer rates in the transmission of information. The term "transparent" is applied to a transmission system in which the signal remains optical without being converted into an electronic signal when passing through a network switching node. Transparency in optical communication networks is a characteristic that makes it possible to reduce the cost of network equipment by eliminating optical-electrical-optical conversions, and therefore the corresponding transducers. Wavelength switching nodes used in transparent WDM networks include devices known as reconfigurable optical add-drop multiplexers (ROADM) or optical cross-connects (OXC). In order to construct such devices, subsystems known as Wavelength Selective Switches (WSS) are particularly attractive. WSSs make it possible to create switching nodes having a very flexible configuration with a much simpler structure than when using discrete components, as well as a reduced size and high reliability.

Add and drop devices in WDM network elements refer to subsystems providing add and drop functions, i.e. a capability to make write-accesses and read-accesses to the WDM transport layer.

Various architectures of transparent switching nodes for WDM networks are disclosed in "Flexible Architectures for Optical Transport nodes and Networks", S. Gringeri et al., IEEE Communications Magazine, July 2010, pp 40-50, and in documents US2009/0232497, WO2011/044371, US2011/0085801 and WO2008/112202.

### Summary

In an embodiment, the invention provides an add device for a WDM optical network element, e.g. an optical switching node, comprising:
a first WDM input adapted to receive optical signals on a plurality of wavelength channels from a first adjacent node of the network,
a second WDM input adapted to receive optical signals on the plurality of wavelength channels from a second adjacent node of the network,
a first programmable demultiplexer associated to the first WDM input,
a second programmable demultiplexer associated to the second WDM input,
optionally, a first WDM output adapted to pass optical signals on the plurality of wavelength channels to the first adjacent node of the network,
optionally, a second WDM output adapted to pass optical signals on the plurality of wavelength channels to the second adjacent node of the network,
optionally, a first transit line connecting the first programmable demultiplexer to the second WDM output,
optionally, a second transit line connecting the second programmable demultiplexer to the first WDM output, and
a receiver block comprising :
   a plurality of optical receivers each adapted to demodulate an optical signal on a selected wavelength channel,
   an optical spatial switching matrix (OSSM) comprising a plurality of transponder-side ports connected to the optical receivers and a plurality of network-side ports, wherein the optical spatial switching matrix is adapted to produce a plurality of optical paths as a function of a configuration state, each optical path adapted to carry optical signals on the plurality of wavelength channels between a selected one of the transponder-side ports and a selected one of the network-side ports,
   a first star-coupler comprising a plurality of coupler outputs connected to a first subset of the network-side ports, the first star-coupler comprising a first coupler input connected to the first programmable demultiplexer and a second coupler input connected to the second programmable demultiplexer, and
   a second star-coupler comprising a plurality of coupler outputs connected to a second subset of the network-side ports, the second star-coupler comprising a first coupler input connected to the first programmable demultiplexer and a second coupler input connected to the second programmable demultiplexer,
wherein the first programmable demultiplexer is adapted to pass to each of the first transit line, if any, the first star-coupler and the second star-coupler optical signals selected as a function of wavelength among the optical signals received from the first WDM input, and
wherein the second programmable demultiplexer is adapted to pass to each of the second transit line, if any, the first star-coupler and the second star-coupler optical signals selected as a function of wavelength among the optical signals received from the second WDM input.

The provision of star couplers having plural outputs connected to respective network-side ports of the OSSM makes it possible to reach plural optical receivers, i.e. to increase the drop capacity attainable through the star coupler.

The provision of star couplers in one receiver block having inputs connected to respective WDM inputs of the switching node makes it possible to use the receiver block for receiving optical signals from several adjacent nodes of the switching node, a property also known as multidirectional drop functionality. At the same time, the provision in one star coupler of plural inputs connected to respective WDM inputs of the switching node increases the flexibility of allocation between the optical receivers of the receiver block and the multiple WDM inputs of the switching node, e.g. to cope with incoming traffics having unbalanced drop capacity requirements at the respective WDM inputs.

The programmable demultiplexer may take different forms, e.g. a WSS or a combination of several WSSs arranged in parallel or in cascade. A parallel arrangement of several WSSs can be built with one or more optical power splitters. Combining several WSSs in such manner makes it possible to obtain a large number of WSSs ports while using relatively cheap WSSs.

According to embodiments, such multidirectional drop devices can comprise one or more of the features below.

In embodiments, the drop device further comprises:
a second receiver block comprising :
   a second plurality of optical receivers each adapted to demodulate an optical signal on a selected wavelength channel,
   a second optical spatial switching matrix comprising a plurality of transponder-side ports connected to the second plurality of optical receivers and a plurality of network-side ports, wherein the optical spatial switching matrix is adapted to produce a plurality of optical paths as a function of a configuration state, each optical path adapted to carry optical signals on the plurality of wavelength channels between a selected one of the transponder-side ports and a selected one of the network-side ports,
   a third star-coupler comprising a plurality of coupler outputs connected to a first subset of the network-side ports, the third star-coupler comprising a first coupler input connected to the first programmable demultiplexer and a second coupler input connected to the second programmable demultiplexer, and
   a fourth star-coupler comprising a plurality of coupler outputs connected to a second subset of the network-side ports, the fourth star-coupler comprising a first coupler input connected to the first programmable demultiplexer and a second coupler input connected to the second programmable demultiplexer,
wherein the first programmable demultiplexer is adapted to pass to each of the first transit line, if any, the first star-coupler, the second star-coupler, the third star-coupler and the fourth star-coupler optical signals selected as a function of wavelength among the optical signals received from the first WDM input, and
wherein the second programmable demultiplexer is adapted to pass to each of the second transit line, if any, the first star-coupler, the second star-coupler, the third star-coupler and the fourth star-coupler optical signals selected as a function of wavelength among the optical signals received from the second WDM input.

Similar receiver blocks may be provided in any number for the purpose of redundancy, protection against faults and increasing the capacity of the drop device.

In an embodiment, at least one of the first star-coupler, the second star-coupler, the third star-coupler and the fourth star-coupler comprises a first plurality of coupler outputs connected to the network-side ports of the first optical spatial switching matrix and a second plurality of coupler outputs connected to the network-side ports of the second optical spatial switching matrix.

In an embodiment, the first and/or second programmable demultiplexer comprises a first wavelength selective switch and a second wavelength selective switch that are arranged in parallel or in cascade so that the optical signals received at the first WDM input are distributed to both the first wavelength selective switch and the second wavelength selective switch,
wherein a first subset of the first star-coupler, the second star-coupler, the third star-coupler and the fourth star-coupler are each connected to the first wavelength selective switch for receiving optical signals selected by the first wavelength selective switch as a function of wavelength among the optical signals received from the first WDM input,
wherein a second subset of the first star-coupler, the second star-coupler, the third star-coupler and the fourth star-coupler, disjoint from the first subset, are each connected to the second wavelength selective switch for receiving optical signals selected by the second wavelength selective switch as a function of wavelength among the optical signals received from the first WDM input.

In an embodiment, a number of the star-couplers in one receiver block is greater than or equal to a number on the WDM inputs of the optical network element. This features makes it possible to considerably mitigate wavelength contention within one receiver block, e.g. between incoming optical signals on the same wavelength channel from different adjacent nodes.

In embodiments, the optical receivers comprise quadratic optical receivers each associated to a wavelength-tunable optical filter. Alternatively, the optical receivers may comprise tunable coherent optical receivers, which can be tuned to any wavelength channel by adapting the frequency of the local oscillator. Coherent receivers may be preferred for transmissions employing very high efficiency modulation schemes such as quadratic phase shift keying with polarization multiplexing (PDM-QPSK) or others.

In an embodiment, the invention also provides a multidirectional add device for a WDM optical network element, e.g. an optical switching node for a WDM optical network, comprising:
optionally, a first WDM input adapted to receive optical signals on a plurality of wavelength channels from a first adjacent node of the network,
optionally, a second WDM input adapted to receive optical signals on the plurality of wavelength channels from a second adjacent node of the network,
a first WDM output adapted to pass optical signals on the plurality of wavelength channels to the first adjacent node of the network,
a second WDM output adapted to pass optical signals on the plurality of wavelength channels to the second adjacent node of the network,
a first programmable multiplexer associated to the first WDM output,
a second programmable multiplexer associated to the second WDM output,
optionally, a first transit line connecting the first WDM input to the second programmable multiplexer,
optionally, a second transit line connecting the second WDM input to the first programmable multiplexer, and
a transmitter block comprising :
   a plurality of optical transmitters each adapted to generate an optical signal on a selected wavelength channel,
   an optical spatial switching matrix comprising a plurality of transponder-side ports connected to the optical transmitters and a plurality of network-side ports, wherein the optical spatial switching matrix is adapted to produce a plurality of optical paths as a function of a configuration state, each optical path adapted to carry optical signals on the plurality of wavelength channels between a selected one of the transponder-side ports and a selected one of the network-side ports,
   a first star-coupler comprising a plurality of coupler inputs connected to a first subset of the network-side ports, the first star-coupler comprising a first coupler output connected to the first programmable multiplexer and a second coupler output connected to the second programmable multiplexer, and
   a second star-coupler comprising a plurality of coupler inputs connected to a second subset of the network-side ports, the second star-coupler comprising a first coupler output connected to the first programmable multiplexer and a second coupler output connected to the second programmable multiplexer,
wherein the first programmable multiplexer is adapted to pass to the first WDM output optical signals selected as a function of wavelength among the optical signals received from the second transit line, if any, the first star-coupler and the second star-coupler, and
wherein the second programmable multiplexer is adapted to pass to the second WDM output optical signals selected as a function of wavelength among the optical signals received from the first transit line, if any, the first star-coupler and the second star-coupler.

The provision of star couplers having plural inputs connected to respective network-side ports of the OSSM makes it possible to pass signals from plural optical transmitters, i.e. to increase the add capacity attainable through the star coupler.

The provision of star couplers in one receiver block having outputs connected to respective WDM outputs of the switching node makes it possible to use the transmitter block for generating optical signals intended from several adjacent nodes of the switching node, a property also known as multidirectional add functionality. At the same time, the provision in one star coupler of plural outputs connected to respective WDM outputs of the switching node increases the flexibility of allocation between the optical transmitters of the transmitter block and the multiple WDM outputs of the switching node, e.g. to generate outgoing traffics having unbalanced add capacity requirements at the respective WDM outputs.

The programmable multiplexer may take different forms, e.g. a WSS or a combination of several WSSs arranged in parallel or in cascade. A parallel arrangement of several WSSs can be built with one or more optical power combiners. Combining several WSSs in such manner makes it possible to obtain a large number of WSSs ports while using relatively cheap WSSs.

According to embodiments, such add devices can comprise one or more of the features below.

In embodiments, the add device further comprises:
a second transmitter block comprising :
   a second plurality of optical transmitters each adapted to generate an optical signal on a selected wavelength channel,
   a second optical spatial switching matrix comprising a plurality of transponder-side ports connected to the second plurality of optical transmitters and a plurality of network-side ports, wherein the optical spatial switching matrix is adapted to produce a plurality of optical paths as a function of a configuration state, each optical path adapted to carry optical signals on the plurality of wavelength channels between a selected one of the transponder-side ports and a selected one of the network-side ports,
   a third star-coupler comprising a plurality of coupler inputs connected to a first subset of the network-side ports, the third star-coupler comprising a first coupler output connected to the first programmable multiplexer and a second coupler output connected to the second programmable multiplexer, and
   a fourth star-coupler comprising a plurality of coupler inputs connected to a second subset of the network-side ports, the fourth star-coupler comprising a first coupler output connected to the first programmable multiplexer and a second coupler output connected to the second programmable multiplexer,
wherein the first programmable multiplexer is adapted to pass to the first WDM output optical signals selected as a function of wavelength among the optical signals received from the second transit line, if any, the first star-coupler, the second star-coupler, the third star-coupler and the fourth star-coupler, and
wherein the second programmable multiplexer is adapted to pass to the second WDM output optical signals selected as a function of wavelength among the optical signals received from the first transit line, if any, the first star-coupler, the second star-coupler, the third star-coupler and the fourth star-coupler.

Similar transmitter blocks may be provided in any number for the purpose of redundancy, protection against faults and increasing the capacity of the add device.

In embodiments, a number of the star-couplers in one transmitter block is greater than or equal to a number on the WDM outputs of the optical network element.

In embodiments, at least one of the first star-coupler, the second star-coupler, the third star-coupler and the fourth star-coupler comprises a first plurality of coupler inputs connected to the network-side ports of the first optical spatial switching matrix and a second plurality of coupler inputs connected to the network-side ports of the second optical spatial switching matrix.

In embodiments, the first and/or second programmable multiplexer comprises a first wavelength selective switch and a second wavelength selective switch arranged in parallel or in cascade so as to merge at the first WDM output the optical signals passed by the first wavelength selective switch and the second wavelength selective switch,
wherein a first subset of the first star-coupler, the second star-coupler, the third star-coupler and the fourth star-coupler are each connected to the first wavelength selective switch for the first wavelength selective switch to pass optical signals selected as a function of wavelength among the optical signals received from the first subset of the star-couplers,
wherein a second subset of the first star-coupler, the second star-coupler, the third star-coupler and the fourth star-coupler, disjoint from the first subset, are each connected to the second wavelength selective switch for the second wavelength selective switch to pass optical signals selected as a function of wavelength among the optical signals received from the second subset of the star-couplers.

In embodiments, a star-coupler comprises a wideband optical amplifier arranged between the coupler inputs and coupler outputs.

Aspects of the invention are based on the idea of providing transparent switching nodes that offer some or all of the following features:
- High add and drop capacity,
- High cascadability resulting from low impact on transit traffic,
- Colorless ports, i.e. ability to direct any wavelength from a given WDM port to a given receiver in the drop device or from a given transmitter in the add device to a given WDM port,
- Multidirectional ports, i.e. ability to direct signals from any node input to a given port in the drop device or ability to direct signals from a given port in the add device to any node output,
- Low contention or contentionless operations,
- Progressive scalability or suitability for pay-as-you grow deployment,
- High connectivity degree,
- Protection against component faults,
- Compatibility with flexible optical frequency grids
- Cost-efficiency,
- Compact footprint.

Aspects of the invention stem for the observation that star couplers having multiple inputs and multiple outputs in add and/or drop devices make it possible to provide a high number of optical paths between the transponders and the WDM layer to reduce contention. Aspects of the invention stem for the observation that power attenuation in an MxP star coupler depends essentially on Log₂[Max(M, P)].

### Brief description of the drawings

These and other aspects of the invention will be apparent from and elucidated with reference to the embodiments described hereinafter, by way of example, with reference to the drawings.
Figure 1 is a functional representation of a transparent optical switching node in accordance with an embodiment.
Figure 2 is a functional representation of a transparent optical switching node in accordance with another embodiment.
Figure 3 is a functional representation of a transparent optical switching node in accordance with an example useful for understanding the invention which can be upgraded to obtain the node of Figure 2 at a later stage of deployment.
Figure 4 is a functional representation of an optical switching node with a multidirectional drop device in accordance with an example useful for understanding the invention.
Figure 5 is an example of an amplified star coupler.
Figure 6 is an example of cascade arrangement of WSS.
Figure 7 is an example of an alternative cascade arrangement of WSS.

### J Detailed description of the embodiments

In a transparent WDM optical network, transparent optical switching nodes are connected by optical links to form a given topology. The term "transparent" is applied to a transmission system, in which the signal remains optical without being converted into an electronic signal when passing through a network switching node. Transparency in optical communication networks is a characteristic that makes it possible to reduce the cost and power consumption of network equipment by eliminating optical-electrical-optical conversions, and therefore the corresponding transducers. Transparency can exist in some or all of the switching nodes of an optical network.

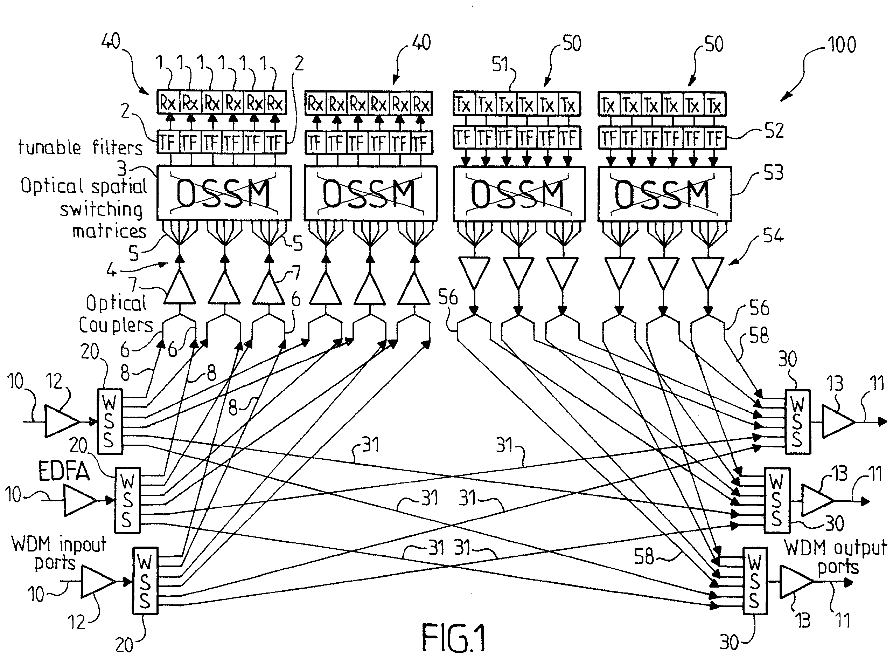

With reference to Figure 1, a transparent optical switching node 100 with degree-3 connectivity will now be described. Namely, switching node 100 can be bidirectionally connected to up to three neighbor nodes as it comprises three WDM input lines 10 for receiving WDM traffic from the three neighbor nodes through optical links and three WDM output lines 11 for sending WDM traffic to the three neighbor nodes through optical links. The neighbor nodes and optical links are omitted on Fig. 1. Switching node 1 can be used in a transparent network or transparent network island with any topology, e.g. mesh, ring, star, tree and others. The same node architecture could be used for a different, higher or lower connectivity degree.

As shown, each WDM input line 10 may comprise an optical amplifier 12 and each WDM output line 11 may comprise an optical amplifier 13 to compensate for the losses of the node components.

Each input line 10 is connected to send the WDM traffic to a respective WSS 20. Each output line 11 is connected to receive WDM traffic from a WSS 30. Between the WSSs 20 and WSSs 30, a plurality of transit lines 31 are connected to pass transit traffic from any of the input lines 10 to any of the output lines 11, except that it is not necessary to provide a transit line between a pair of input and output lines that connect to a same neighboring node.

A wavelength selective switch (WSS) refers to a piece of equipment that may be used as a reconfigurable multiplexer or a reconfigurable demultiplexer. When it is acting as a multiplexer, as WSSs 30 are, a plurality of selectable ports serve as inputs, and a common port serves as an output. The wavelength selective switch comprises grating components capable of separating a WDM optical signal received at an input port into a plurality of beams corresponding to predefined non-overlapping spectral bands, and light steering means capable of steering independently the optical beam corresponding to a respective spectral band either towards the output or towards an absorber. Thereby, the spectral component of the incoming WDM signal belonging to a spectral band can be switched as a whole, i.e. either passed to the common output or blocked. The same function is achieved for each spectral band at each input.

This piece of equipment thereby carries out a reconfigurable multiplexing function on spectral bands whose optical frequencies are aligned with one or more predetermined frequency grids. It makes it possible to pass, from each input to the common output, one spectral band, multiple spectral bands, or no spectral band, selected from among the signals received at the respective input.

The switching or steering of beams within the WSS is produced by spatial light manipulation organs, such as micromirrors activated by MEMS micro-actuators or liquid crystal cells. In addition to selecting the spectral bands, these organs may be capable of adjusting the signal attenuation for each spectral band. In this manner, each WSS 30 serves to both select the spectral bands that must be passed to a given output line 11 and to adjust their output power band-by-band towards the corresponding output line 11.

Similarly, when it is acting as a demultiplexer, as WSS 20, a common port serves as an input and a plurality of selectable ports serve as outputs.

The width of the spectral bands switched by the WSSs 20 and 30 depends on the design of the WSSs. Preferably, this width is selected to match a single wavelength channel of a standard ITU grid. Alternatively, this width is selected as a multiple of a standard ITU channel spacing, i.e. Nx100GHz, Nx50GHz or Nx25GHz, where N is an integer, e.g. N = 4, N=8 or other. Some advanced WSSs can also provide an adaptable filtering function with adjustable spectral width. This feature makes it possible to implement flexible optical frequency grids in the WDM network.

The multidirectional drop device of the node will now be described. The multidirectional drop device comprises two identical receiver blocks 40.

The receiver block 40 comprises optical receivers 1, for example quadratic receivers or coherent receivers coupled with frequency-tunable filters 2, intended to demodulate optical signals modulated with data to provide the data to client devices, not shown. The client devices refer to any system that interfaces with the WDM network to receive information signals transported by the WDM network, i.e. to make a read access to the WDM layer, including for example an electronic switch intended to transfer the information signals to a further network.

With a coherent receiver, it is possible to select a wavelength channel to be demodulated among a plurality of superimposed wavelength channels by finely tuning a monochromatic local oscillator. Therefore in the case where coherent receivers are used, the frequency-tunable filters 2 are not necessary. The coherent receiver may receive a single wavelength channel, i.e. a colored optical signal, or a plurality of superimposed wavelength channels, i.e. a WDM optical signal.

To route the optical signals to the receivers 1, an optical spatial switching matrix 3 (OSSM) is provided. The OSSM 3 comprises output ports on the receiver-side and input ports on the opposite side. The OSSM 3 is a configurable non-blocking space switch that can be configured to generate transparent optical paths between any of its input ports and any of its output ports to pass colored or WDM optical signals independently of the wavelength thereof, within a given spectral window of course. In a given receiver block, each optical receiver 1 is connected to a respective output port of the OSSM 3. The OSSM 3 may have some remaining ports (not shown) on the receiver side that are not connected to the receivers 1. Such remaining ports may serve several purposes, such as scaling the receiver block 40 capacity by connecting additional receivers. The OSSM 3 may be implemented with diverse technologies, e.g. MEMS-operated reflectors or piezoelectric optical beam steering. Suitable MEMS-based OSSMs are available from manufacturers such as Calient Technologies or CrossFiber Inc.

The combined reconfigurability of the OSSM 3 and wavelength tunability of the optical receivers 1 make it possible to receive any of the wavelength channels on any of the receivers 1. This feature of the receiver block 40 provides some protection against receiver failures.

The input ports of the OSSM 3 are connected to the outputs 5 of multiple star couplers 4, three star couplers 4 in the example shown. A star coupler 4 comprises multiple inputs 6, in the number of two in the example shown, and multiple outputs 5, in the number of five in the example shown. The respective inputs 6 of a star coupler 4 are connected by drop lines 8 to respective WSSs 20 associated to different input lines 10 of the node 100.

A WSS 20 serves to distribute the optical signals coming from an adjacent node to the transit lines 31 or to the drop lines 8, depending on the destination of the signals. The distribution is based on wavelength at the filtering granularity of the WSS 20.

As shown, a star coupler 4 may include a broadband power amplification stage 7 to compensate for power losses generated by the drop device. Such active star couplers 4 with incorporated amplification stage 7 can be made using known techniques, e.g. based on single-mode fibers, Si on Silicon or GaInAsP/InP semi-conductors. The amplification stage 7 can be made with optically pumped Erbium-doped fiber or GaInAsP/InP type semiconductor amplifiers or other distributed amplification technology.

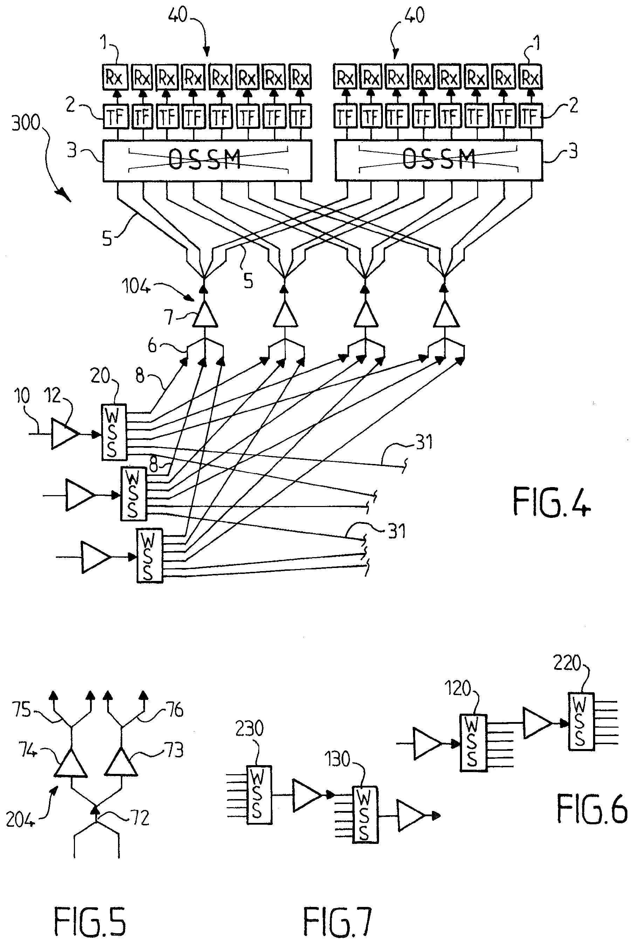

An amplified star coupler can also be made of discrete components, as outlined in Fig. 5. In the example of Fig. 5, the star coupler 204 is made of a 2x2 optical coupler 72 with two outputs, whereof each output is connected an optical amplifier 73 or 74 in series with a 1x2 splitter 75 or 76.

The dimensioning of a receiver block 40 is preferably based on the following considerations:
- The total number of receivers 1 should match the total drop capacity required in the node. There usually exists a fraction of the incoming traffic in an optical element that is intended to traverse the node transparently (through-traffic). Therefore, the total drop capacity can be lower than the total number of channels in the grid times the connectivity degree of the node. This total capacity can be provided in a single receiver block 40 or distributed in a plurality of receiver blocks 40, i.e. two in the example shown.
- The number of receiver blocks 40 depends on the port count of the OSSM 3. This count can be high enough, possibly higher than the number of wavelength channels on the grid, e.g. up to 96 ports on each side. Alternatively a smaller OSSM with e.g. 20 ports on each side or less can also be used. The ability to rely on smaller OSSMs is an advantage of the architecture in terms of initial cost; i.e. a minimal configuration can be initially provided at a low cost whereas the node capacity can be gradually expanded by connecting further receiver blocks as needed. Also, in case of OSSM failure, smaller OSSMs have a smaller individual impact on the traffic.
- To optimize the use of the OSSM, 3 the number of OSSM ports should be equal or close to the number of connected receivers 1.
- The number of star couplers 4 in the receiver block 40 is preferably greater than or equal to the connectivity degree of the node, so the receiver block 40 is adapted to cope simultaneously with optical signals at the same wavelength coming from each adjacent node. It is noted that the connectivity degree may grow over time with scalable architectures as described herein. The number of star couplers per block may evolve as well provided that additional ports were initially left available in the OSSM 3.
- The total number of coupler outputs 5 connected to the OSSM 3 should be greater than or equal to the number of connected receivers 1 so that all receivers 1 can be in service at the same time. To achieve this in a fully equipped node, it is preferred to use identical star couplers 4 each having a number J of coupler outputs 5 verifying J=INT(M/N), where INT denotes the integer part, N denotes the maximum connectivity degree of the node and M denotes the size of the OSSM 3. This dimensioning of the star couplers 4 can be used from the initial implementation of the node, so that star couplers 4 need not be changed when additional degrees are added.
- The number of coupler inputs 6 per star coupler 4 should not be too high in order to limit the number of WSS ports consumed by the drop device. Under current technology, WSSs ports are an expensive part of the optical node. Advantageously, the number of coupler inputs 6, i.e. the number of WSSs ports connected to a receiver block 40, is selected as a function of the number of receivers 1 in the receiver block, so as to spend one WSSs port for more than 20 receivers, e.g. for 24 to 32 receivers.

The multidirectional add device of the node will now be described. The multidirectional add device comprises two identical transmitter blocks 50. The transmitter block 50 is designed is a very similar manner to receiver block 40. Namely, the receivers 1 are substituted with transmitters 51 and the OSSM 53 and star couplers 54 operate in the opposite direction in transmitter block 50. The transmitters 51 may comprise frequency-tunable lasers or broadband light sources coupled with frequency-tunable filters 52. The coupler outputs 56 are connected by add lines 58 to respective input ports of the WSSs 30. As the optical properties of both OSSMs and star couplers are the same in both directions, the operation of such add device can be directly deduced from the above description of the drop device.

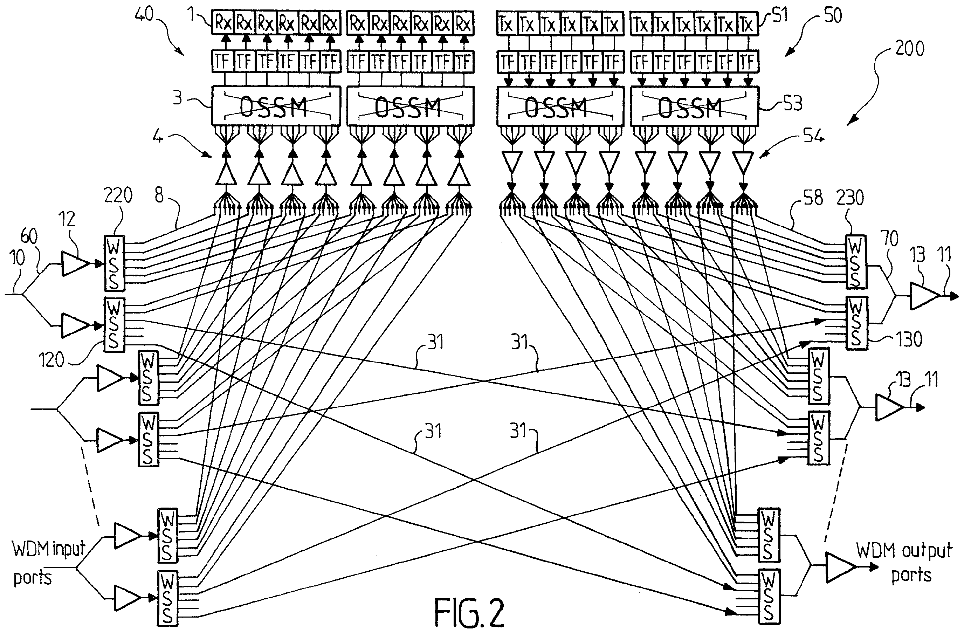

With reference to Figure 2, a transparent optical switching node 200 with degree-3 connectivity will now be described. Elements identical or similar to those of optical switching node 100 are designated by the same numeral.

Not all input lines 10 and output lines 11 of the optical switching node 200 are represented in Figure 2. Namely, optical switching node 200 could be for example a degree-4 node. Each input line 10 is associated to a pair of WSSs 120 and 220 through an optical power splitter 60 that splits the incoming traffic without any filtering. WSS 120 operates as WSS 20 of optical switching node 100. By contrast, WSS 220 serves only to drop optical signals as it is not connected to the transit lines 31.

The provision of pairs of WSSs associated to each input line 10 makes it possible to increase the number of WSSs ports connected to the drop device while using relatively small port-count WSSs, e.g. 1x9 WSSs. This may be needed to scale the drop capacity of the node.

Similarly, each output line 11 is associated to a pair of WSSs 130 and 230 through an optical power combiner 70 that merges the outputs of WSSs 130 and 230 without any filtering. WSS 130 operates as WSS 30 of optical switching node 100. By contrast, WSS 230 serves only to add optical signals as it is not connected to the transit lines 31.

It should be noted that the parallel arrangements shown on Fig. 2 are not the only way of increasing the number of WSSs ports. The cascade arrangements of WSSs 120 and 220 shown in Fig. 6 and WSSs 130 and 230 shown in Fig. 7 would provide a similar result. It can be noted that the power splitter 60 distributes all the incoming traffic to both WSSs 120 and 220, whereas the cascade arrangement of Fig. 6 has the WSS 120 select the incoming traffic that is distributed to the WSS 220, i.e. it implements a selective distribution.

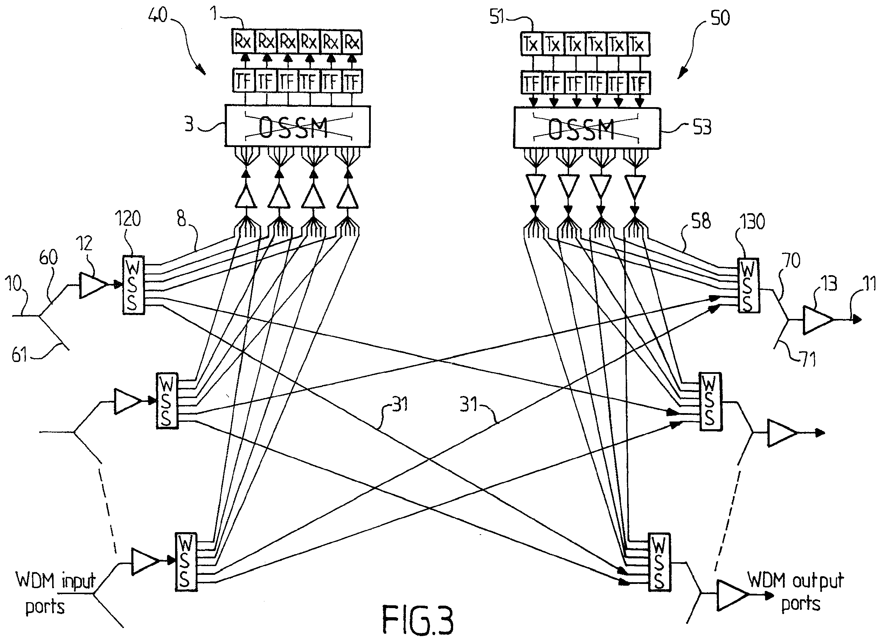

Figure 3 shows a similar optical switching node with a lower add and a drop capacity. Elements identical or similar to those of optical switching node 200 are designated by the same numeral. Figure 3 illustrates a sub-equipped version of optical switching node 200, in which optical power splitter 60 has a free branch 61 for the future connection of the additional WSS 130 and optical power combiner 70 has a free branch 71 for the future connection of the additional WSS 230. Figures 2 and 3 illustrate just one way among others in which the node architecture can be expanded to over time to cope with increasing traffic.

Figure 3 illustrates an example of an initial node configuration can be made relatively inexpensive whereas the node is adapted to be upgraded to a very high-capacity and high-connectivity configuration in the future.

The architecture shown on figure 1 can also be implemented with a higher connectivity degree. In case of large connectivity, e.g. higher than 5, WSSs 20 with more than 20 ports may be needed. For instance, in case of an 8-degree node with 50% Add and Drop capacity, three parallel receiver blocks 40 are needed, each of them featuring a 128x128 OSSM 3. Each receiver block 40 should be connected 8 times to each WSS 20. This means that each WSS 20 uses 3*8=24 ports for the connections with the drop device. Additional ports are consumed by the transit part, namely each WSS 20 should be connected to the seven other directions. Therefore, 1x31 WSSs are required for this 8 degree OXC. The association of multiple WSSs in parallel, e.g. two 1x20 WSSs, as shown in Figure 2 is one possible way of making such large port count WSSs. It is noticeable that such a "double WSS" is not required from the beginning of life of the OXC. Indeed as exemplified in figure 3, a single 1x20 WSS for each input line 10 can be suitable for intermediate Drop capacity. In figure 3, the extending optical couplers 60 are already provided for the connection with the future "expansion" WSSs 220.

Figure 4 partially shows another example useeful for understanding the invention of an optical switching node 300 with a multidirectional drop device. Elements identical or similar to those of optical switching node 100 are designated by the same numeral. The main difference with Fig. 1 lies in the connection between the star couplers 104 and the OSSMs 3 of the two receiver blocks 40. Namely, among the four outputs 5 of a star coupler 104, two outputs are connected to the OSSM of the first receiver block and two other outputs are connected to the OSSM of the second receiver block.

Additionally, Fig. 4 illustrates the layout of a drop device using OSSMs having a small port-count, i.e. 8x8. The minimum admissible size for an OSSM 3 should be decided in view of the foreseen extensibility of the network element, so that the initial node configuration is compatible with later extensions without changing all components, e.g. OSSMs. In this respect, the number of ports of the OSSM should be from the start equal to or higher than the final connectivity degree of the node at full capacity. A maximum node connectivity degree goes scarcely higher than 8 in current network architectures.

Although the above description relates mainly to transparent switching nodes equipped with add and drop devices, it should be noted that the illustrated drop devices and add devices can be built as independent network elements, i.e. terminals without a transit function. As an example a drop device terminal can be easily deduced from Fig. 4 by omitting the transit lines 31. A corresponding add device terminal, although not shown, can be easily deduced by substituting the receivers with transmitters and inversing all the optical amplifiers.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A multidirectional drop device for a WDM optical network element (100, 200), comprising:
a first WDM input (10) adapted to receive optical signals on a plurality of wavelength channels from a first adjacent node of the network,
a second WDM input (10) adapted to receive optical signals on the plurality of wavelength channels from a second adjacent node of the network,
a first programmable demultiplexer (20, 120, 220) associated to the first WDM input,
a second programmable demultiplexer (20, 120, 220) associated to the second WDM input,
a first receiver block (40) comprising :
a first plurality of optical receivers (1) each adapted to demodulate an optical signal on a selected wavelength channel,
a first optical spatial switching matrix (3) comprising a plurality of transponder-side ports connected to the optical receivers (1) and a plurality of network-side ports, wherein the first optical spatial switching matrix is adapted to produce a plurality of optical paths as a function of a configuration state, each optical path adapted to carry optical signals on the plurality of wavelength channels between a selected one of the transponder-side ports and a selected one of the network-side ports,
a first star-coupler (4) comprising a plurality of coupler outputs (5) all connected to a first subset of the network-side ports of the first optical spatial switching matrix (3), and
a second star-coupler (4) comprising a plurality of coupler outputs (5) all connected to a second subset of the network-side ports of the first optical spatial switching matrix (3),and
a second receiver block (40) comprising :
a second plurality of optical receivers (1) each adapted to demodulate an optical signal on a selected wavelength channel,
a second optical spatial switching matrix (3) comprising a plurality of transponder-side ports connected to the second plurality of optical receivers (1) and a plurality of network-side ports, wherein the second optical spatial switching matrix is adapted to produce a plurality of optical paths as a function of a configuration state, each optical path adapted to carry optical signals on the plurality of wavelength channels between a selected one of the transponder-side ports and a selected one of the network-side ports,
a third star-coupler (4) comprising a plurality of coupler outputs all connected to a first subset of the network-side ports of the second optical spatial switching matrix (3), and
a fourth star-coupler (4) comprising a plurality of coupler outputs all connected to a second subset of the network-side ports of the second optical spatial switching matrix (3), **characterized in that**:
the first star-coupler comprises a plurality of coupler inputs, of which a first coupler input (6) is connected to the first programmable demultiplexer (20, 120, 220) and a second coupler input (6) is connected to the second programmable demultiplexer,
the second star-coupler comprises a plurality of coupler inputs, of which a first coupler input is connected to the first programmable demultiplexer and a second coupler input is connected to the second programmable demultiplexer,
the third star-coupler comprises a plurality of coupler inputs, of which a first coupler input is connected to the first programmable demultiplexer and a second coupler input is connected to the second programmable demultiplexer,
the fourth star-coupler comprises a plurality of coupler inputs, of which a first coupler input is connected to the first programmable demultiplexer and a second coupler input is connected to the second programmable demultiplexer,
wherein the first programmable demultiplexer (20, 120, 220) is adapted to pass to each of the first star-coupler (4,), the second star-coupler (4,), the third star-coupler (4) and the fourth star-coupler (4) optical signals selected as a function of wavelength among the optical signals received from the first WDM input, and
wherein the second programmable demultiplexer (20, 120, 220) is adapted to pass to each of the first star-coupler (4), the second star-coupler (4), the third star-coupler (4) and the fourth star-coupler (4) optical signals selected as a function of wavelength among the optical signals received from the second WDM input.

2. A multidirectional drop device in accordance with claim 1, wherein one of the programmable demultiplexers comprises a first wavelength selective switch (120) and a second wavelength selective switch (220) arranged in parallel or in cascade so that the optical signals received at the first WDM input are distributed to both the first wavelength selective switch (120) and the second wavelength selective switch (220),
wherein a first subset of the first star-coupler (4), the second star-coupler (4), the third star-coupler (4) and the fourth star-coupler (4) are each connected to the first wavelength selective switch (120) for receiving optical signals selected by the first wavelength selective switch as a function of wavelength among the optical signals received from the first WDM input,
wherein a second subset of the first star-coupler (4), the second star-coupler (4), the third star-coupler (4) and the fourth star-coupler (4), disjoint from the first subset, are each connected to the second wavelength selective switch (220) for receiving optical signals selected by the second wavelength selective switch as a function of wavelength among the optical signals received from the first WDM input.

3. A multidirectional drop device in accordance with one of claims 1 to 2, wherein a number of the star-couplers (4) in one receiver block (40) is greater than or equal to a number on the WDM inputs (10) of the optical network element (100, 200, 300).

4. A multidirectional drop device in accordance with one of claims 1 to 3, wherein the optical receivers (1) comprise coherent optical receivers.

5. A multidirectional drop device in accordance with one of claims 1 to 4, wherein the optical receivers (1) comprise quadratic optical receivers each associated to a wavelength-tunable optical filter (2).

6. An optical switching node comprising a multidirectional drop device in accordance with one of claims 1 to 5, the optical switching node further comprising:
a first WDM output (11) adapted to pass optical signals on the plurality of wavelength channels to the first adjacent node of the network,
a second WDM output (11) adapted to pass optical signals on the plurality of wavelength channels to the second adjacent node of the network,
a first transit line (31) connecting the first programmable demultiplexer to the second WDM output, and
a second transit line (31) connecting the second programmable demultiplexer to the first WDM output,
wherein the first programmable demultiplexer (20) is adapted to pass to each of the first transit line (31), the first star-coupler (4), the second star-coupler (4), the third star-coupler (4) and the fourth star-coupler (4) optical signals selected as a function of wavelength among the optical signals received from the first WDM input, and
wherein the second programmable demultiplexer (20) is adapted to pass to each of the second transit line (31), the first star-coupler (4), the second star-coupler (4), the third star-coupler (4) and the fourth star-coupler (4) optical signals selected as a function of wavelength among the optical signals received from the second WDM input.

7. A multidirectional add device for a WDM optical network element (100, 200), comprising:
a first WDM output (11) adapted to pass optical signals on a plurality of wavelength channels to a first adjacent node of the network,
a second WDM output (11) adapted to pass optical signals on the plurality of wavelength channels to a second adjacent node of the network,
a first programmable multiplexer (30, 130) associated to the first WDM output,
a second programmable multiplexer (30, 130) associated to the second WDM output,
a first transmitter block (50) comprising :
a plurality of optical transmitters (51) each adapted to generate an optical signal on a selected wavelength channel,
an first optical spatial switching matrix (53) comprising a plurality of transponder-side ports connected to the optical transmitters and a plurality of network-side ports, wherein the first optical spatial switching matrix is adapted to produce a plurality of optical paths as a function of a configuration state, each optical path adapted to carry optical signals on the plurality of wavelength channels between a selected one of the transponder-side ports and a selected one of the network-side ports,
a first star-coupler (54) comprising a plurality of coupler inputs all connected to a first subset of the network-side ports of the first optical spatial switching matrix (53), and
a second star-coupler (54) comprising a plurality of coupler inputs all connected to a second subset of the network-side ports of the first optical spatial switching matrix (53), and
a second transmitter block (50) comprising :
a second plurality of optical transmitters (51) each adapted to generate an optical signal on a selected wavelength channel,
a second optical spatial switching matrix (53) comprising a plurality of transponder-side ports connected to the second plurality of optical transmitters (1) and a plurality of network-side ports, wherein the optical spatial switching matrix is adapted to produce a plurality of optical paths as a function of a configuration state, each optical path adapted to carry optical signals on the plurality of wavelength channels between a selected one of the transponder-side ports and a selected one of the network-side ports,
a third star-coupler (54) comprising a plurality of coupler inputs all connected to a first subset of the network-side ports of the second optical spatial switching matrix, and
a fourth star-coupler (54) comprising a plurality of coupler inputs all connected to a second subset of the network-side ports of the second optical spatial switching matrix,
**characterized in that**:
the first star-coupler (54) comprises a plurality of coupler outputs, of which a first coupler output is connected to the first programmable multiplexer and a second coupler output is connected to the second programmable multiplexer,
the second star-coupler (54) comprises a plurality of coupler outputs, of which a first coupler output is connected to the first programmable multiplexer and a second coupler output is connected to the second programmable multiplexer,
the third star-coupler comprises a plurality of coupler outputs, of which a first coupler output is connected to the first programmable multiplexer and a second coupler output is connected to the second programmable multiplexer,
the fourth star-coupler comprises a plurality of coupler outputs, of which a first coupler output is connected to the first programmable multiplexer and a second coupler output is connected to the second programmable multiplexer,
wherein the first programmable multiplexer is adapted to pass to the first WDM output optical signals selected as a function of wavelength among the optical signals received from the first star-coupler (54), the second star-coupler (54), the third star-coupler (54) and the fourth star-coupler (54), and
wherein the second programmable multiplexer is adapted to pass to the second WDM output optical signals selected as a function of wavelength among the optical signals received from the first star-coupler (54), the second star-coupler (54), the third star-coupler (54) and the fourth star-coupler (54).

8. A multidirectional add device in accordance with claim 7, wherein one of the programmable demultiplexers comprises a first wavelength selective switch (130) and a second wavelength selective switch (230) arranged in parallel or in cascade so as to merge at the first WDM output the optical signals passed by the first wavelength selective switch (130) and the second wavelength selective switch (230),
wherein a first subset of the first star-coupler (4), the second star-coupler (4), the third star-coupler (4) and the fourth star-coupler (4) are each connected to the first wavelength selective switch (120) for the first wavelength selective switch to pass optical signals selected as a function of wavelength among the optical signals received from the first subset of the star-couplers,
wherein a second subset of the first star-coupler (4), the second star-coupler (4), the third star-coupler (4) and the fourth star-coupler (4)), disjoint from the first subset, are each connected to the second wavelength selective switch (220) for the second wavelength selective switch to pass optical signals selected as a function of wavelength among the optical signals received from the second subset of the star-couplers.

9. A multidirectional add device in accordance with one of claims 7 to 8, wherein a number of the star-couplers (54) in one transmitter block (50) is greater than or equal to a number on the WDM outputs (11) of the optical network element.

10. An optical switching node comprising a multidirectional add device in accordance with one of claims 7 to 9, the optical switching node further comprising:
a first WDM input (10) adapted to receive optical signals on the plurality of wavelength channels from the first adjacent node of the network,
a second WDM input (10) adapted to receive optical signals on the plurality of wavelength channels from the second adjacent node of the network,
a first transit line (31) connecting the first WDM input to the second programmable multiplexer,
a second transit line (31) connecting the second WDM input to the first programmable multiplexer,
wherein the first programmable multiplexer is adapted to pass to the first WDM output optical signals selected as a function of wavelength among the optical signals received from the second transit line (31), the first star-coupler (54), the second star-coupler (54), the third star-coupler (54) and the fourth star-coupler (54), and
wherein the second programmable multiplexer is adapted to pass to the second WDM output optical signals selected as a function of wavelength among the optical signals received from the first transit line (31), the first star-coupler (54), the second star-coupler (54), the third star-coupler (54) and the fourth star-coupler (54).

11. A multidirectional add or drop device in accordance with one of claims 1 to 5 and 7 to 10, wherein a star-coupler (4, 54) comprises a wideband optical amplifier (7) arranged between the coupler inputs (6) and coupler outputs (5).

## Patentansprüche

1. Eine multidirektionale Drop-Vorrichtung für ein optisches WDM-Netzwerkelement (100, 200), umfassend:
einen ersten WDM-Eingang (10), der ausgelegt ist für den Empfang optischer Signale auf einer Vielzahl von Wellenlängenkanälen von einem ersten angrenzenden Knoten des Netzwerks,
einen zweiten WDM-Eingang (10), der ausgelegt ist für den Empfang optischer Signale auf der Vielzahl von Wellenlängenkanälen von einem zweiten angrenzenden Knoten des Netzwerks,
einen ersten programmierbaren Demultiplexer (20, 120, 220), der mit dem ersten WDM-Eingang assoziiert ist,
einen zweiten programmierbaren Demultiplexer (20, 120, 220), der mit dem zweiten WDM-Eingang assoziiert ist,
einen ersten Empfängerblock (40), umfassend:
eine erste Vielzahl optischer Empfänger (1), jeder von ihnen ausgelegt für das Demodulieren eines optischen Signals auf einem ausgewählten Wellenlängenkanal,
eine erste optische Raumschaltmatrix (3), die eine Vielzahl transponderseitiger Ports umfasst, die mit den optischen Empfängern (1) verbunden sind, und eine Vielzahl netzwerkseitiger Ports, wobei die erste optische Raumschaltmatrix ausgelegt ist für das Produzieren einer Vielzahl optischer Pfade in Funktion eines Konfigurationsstatus, wobei jeder optische Pfad ausgelegt ist für das Tragen optischer Signale auf der Vielzahl von Wellenlängenkanälen zwischen einem ausgewählten der transponderseitigen Ports und einem ausgewählten der netzwerkseitigen Ports,
einen ersten Sternkoppler (4), eine Vielzahl von Kopplerausgängen (5) umfassend, die sämtlich mit einem ersten Teilsatz der netzwerkseitigen Ports der ersten optischen Raumschaltmatrix (3) verbunden sind, und
einen zweiten Sternkoppler (4), eine Vielzahl von Kopplerausgängen (5) umfassend, die sämtlich mit einem zweiten Teilsatz der netzwerkseitigen Ports der ersten optischen Raumschaltmatrix (3) verbunden sind, und
einen zweiten Empfängerblock (40), umfassend:
eine zweite Vielzahl optischer Empfänger (1), jeder von ihnen ausgelegt für das Demodulieren eines optischen Signals auf einem ausgewählten Wellenlängenkanal,
eine zweite optische Raumschaltmatrix (3), die eine Vielzahl transponderseitiger Anschlüsse umfasst, die mit der zweiten Vielzahl optischer Empfänger (1) verbunden sind, und eine Vielzahl netzwerkseitiger Anschlüsse, wobei die zweite optische Raumschaltmatrix ausgelegt ist für das Produzieren einer Vielzahl optischer Pfade in Funktion eines Konfigurationsstatus, wobei jeder optische Pfad ausgelegt ist für das Tragen optischer Signale auf der Vielzahl von Wellenlängenkanälen zwischen einem ausgewählten der transponderseitigen Ports und einem ausgewählten der netzwerkseitigen Ports,
einen dritten Sternkoppler (4), der eine Vielzahl von Kopplerausgängen umfasst, die sämtlich mit einem ersten Teilsatz der netzwerkseitigen Ports der zweiten optischen Raumschaltmatrix (3) verbunden sind,
und einen vierten Sternkoppler (4), der eine Vielzahl von Kopplerausgängen umfasst, die sämtlich mit einem zweiten Teilsatz der netzwerkseitigen Ports der zweiten optischen Raumschaltmatrix (3) verbunden sind,
**dadurch gekennzeichnet, dass**:
der erste Sternkoppler eine Vielzahl von Kopplereingängen umfasst, von denen ein erster Kopplereingang (6) mit dem ersten programmierbaren Demultiplexer (20, 120, 220) und ein zweiter Kopplereingang (6) mit dem zweiten programmierbaren Demultiplexer verbunden ist,
der zweite Sternkoppler eine Vielzahl von Kopplereingängen umfasst, von denen ein erster Kopplereingang mit dem ersten programmierbaren Demultiplexer und ein zweiter Kopplereingang mit dem zweiten programmierbaren Demultiplexer verbunden ist,
der dritte Sternkoppler eine Vielzahl von Kopplereingängen umfasst, von denen ein erster Kopplereingang mit dem ersten programmierbaren Demultiplexer und ein zweiter Kopplereingang mit dem zweiten programmierbaren Demultiplexer verbunden ist,
der vierte Sternkoppler eine Vielzahl von Kopplereingängen umfasst, von denen ein erster Kopplereingang mit dem ersten programmierbaren Demultiplexer und ein zweiter Kopplereingang mit dem zweiten programmierbaren Demultiplexer verbunden ist,
wobei der erste programmierbare Demultiplexer (20, 120, 220) dafür ausgelegt ist, um an jeden aus der Gruppe des ersten Sternkopplers (4), des zweiten Sternkopplers (4), des dritten Sternkopplers (4) und des vierten Sternkopplers (4) optische Signale weiterzuleiten, die in Funktion der Wellenlänge unter den optischen Signalen ausgewählt wurden, die vom ersten WDM-Eingang empfangen wurden, und
wobei der zweite programmierbare Demultiplexer (20, 120, 220) dafür ausgelegt ist, um an jeden aus der Gruppe des ersten Sternkopplers (4), des zweiten Sternkopplers (4), des dritten Sternkopplers (4) und des vierten Sternkopplers (4) optische Signale weiterzuleiten, die in Funktion der Wellenlänge unter den optischen Signalen ausgewählt wurden, die vom zweiten WDM-Eingang empfangen wurden.

2. Multidirektionale Drop-Vorrichtung nach Anspruch 1, wobei einer der programmierbaren Demultiplexer einen ersten wellenlängenselektiven Schalter (120) und einen zweiten wellenlängenselektiven Schalter (220) umfasst, die parallel oder kaskadiert angeordnet sind, dergestalt, dass die am ersten WDM-Eingang empfangenen optischen Signale sowohl an den ersten wellenlängenselektiven Schalter (120) als auch an den zweiten wellenlängenselektiven Schalter (220) verteilt werden,
wobei die Sternkoppler eines ersten Teilsatzes aus dem ersten Sternkoppler (4), dem zweiten Sternkoppler (4), dem dritten Sternkoppler (4) und dem vierten Sternkoppler (4) jeweils mit dem ersten wellenlängenselektiven Schalter (120) verbunden sind, um optische Signale zu empfangen, die vom ersten wellenlängenselektiven Schalter in Funktion einer Wellenlänge unter den optischen Signalen ausgewählt werden, die vom ersten WDM-Eingang empfangen werden,
wobei die Sternkoppler eines zweiten, zum ersten Teilsatz disjunktiven Teilsatzes aus dem ersten Sternkoppler (4), dem zweiten Sternkoppler (4), dem dritten Sternkoppler (4) und dem vierten Sternkoppler (4) jeweils mit dem zweiten wellenlängenselektiven Schalter (220) verbunden sind, um optische Signale zu empfangen, die vom zweiten wellenlängenselektiven Schalter in Funktion einer Wellenlänge unter den optischen Signalen ausgewählt werden, die vom ersten WDM-Eingang empfangen werden.

3. Multidirektionale Drop-Vorrichtung nach einem der Ansprüche 1 bis 2, wobei eine Anzahl von Sternkopplern (4) in einem Empfängerblock (40) größer oder gleich der Anzahl der WDM-Eingänge (10) des optischen Netzwerkelements (100, 200, 300) ist.

4. Multidirektionale Drop-Vorrichtung nach einem der Ansprüche 1 bis 3, wobei die optischen Empfänger (1) kohärente optische Empfänger umfassen.

5. Multidirektionale Drop-Vorrichtung nach einem der Ansprüche 1 bis 4, wobei die optischen Empfänger (1) kohärente optische Empfänger umfassen, von denen ein jeder mit einem wellenlängenabstimmbaren optischen Filter (2) assoziiert ist.

6. Optischer Schaltknoten, eine multidirektionale Drop-Vorrichtung nach einem der Ansprüche 1 bis 5 umfassend, wobei der optische Schaltknoten weiterhin umfasst:
einen ersten WDM-Ausgang (11), der ausgelegt ist für das Weiterleiten optischer Signale auf einer Vielzahl von Wellenlängenkanälen an den ersten angrenzenden Knoten des Netzwerks,
einen zweiten WDM-Ausgang (11), der ausgelegt ist für das Weiterleiten optischer Signale auf einer Vielzahl von Wellenlängenkanälen an den zweiten angrenzenden Knoten des Netzwerks,
eine erste Transitleitung (31), welche den ersten programmierbaren Demultiplexer mit dem zweiten WDM-Ausgang verbindet, und
eine zweite Transitleitung (31), welche den zweiten programmierbaren Demultiplexer mit dem ersten WDM-Ausgang verbindet, und
wobei der erste programmierbare Demultiplexer (20) dafür ausgelegt ist, um an jedes Element aus der Gruppe der ersten Transitleitung (31), des ersten Sternkopplers (4), des zweiten Sternkopplers (4), des dritten Sternkopplers (4) und des vierten Sternkopplers (4) optische Signale weiterzuleiten, die in Funktion der Wellenlänge unter den optischen Signalen ausgewählt wurden, die vom ersten WDM-Eingang empfangen wurden, und
wobei der zweite programmierbare Demultiplexer (20) dafür ausgelegt ist, um an jedes Element aus der Gruppe der zweiten Transitleitung (31), des ersten Sternkopplers (4), des zweiten Sternkopplers (4), des dritten Sternkopplers (4) und des vierten Sternkopplers (4) optische Signale weiterzuleiten, die in Funktion der Wellenlänge unter den optischen Signalen ausgewählt wurden, die vom zweiten WDM-Eingang empfangen wurden.

7. Eine multidirektionale Add-Vorrichtung für ein optisches WDM-Netzwerkelement (100, 200), umfassend:
einen ersten WDM-Ausgang (11), der ausgelegt ist für das Weiterleiten optischer Signale auf einer Vielzahl von Wellenlängenkanälen an einen ersten angrenzenden Knoten des Netzwerks,
einen zweiten WDM-Ausgang (11), der ausgelegt ist für das Weiterleiten optischer Signale auf einer Vielzahl von Wellenlängenkanälen an einen zweiten angrenzenden Knoten des Netzwerks,
einen ersten programmierbaren Multiplexer (30, 130), der assoziiert ist mit dem ersten WDM-Ausgang,
einen zweiten programmierbaren Multiplexer (30, 130), der assoziiert ist mit dem zweiten WDM-Ausgang,
einen ersten Empfängerblock (50), umfassend:
eine Vielzahl optischer Sender (51), jeder von ihnen ausgelegt für das Generieren eines optischen Signals auf einem ausgewählten Wellenlängenkanal,
eine erste optische Raumschaltmatrix (53), die eine Vielzahl transponderseitiger Anschlüsse, umfasst, die mit den optischen Sendern verbunden sind, und eine Vielzahl netzwerkseitiger Anschlüsse, wobei die erste optische Raumschaltmatrix ausgelegt ist für das Produzieren einer Vielzahl optischer Pfade in Funktion eines Konfigurationsstatus, wobei jeder optische Pfad ausgelegt ist für das Tragen optischer Signale auf der Vielzahl von Wellenlängenkanälen zwischen einem ausgewählten der transponderseitigen Ports und einem ausgewählten der netzwerkseitigen Ports,
einen ersten Sternkoppler (54), eine Vielzahl von Kopplereingängen umfassend, die sämtlich mit einem ersten Teilsatz der netzwerkseitigen Ports der ersten optischen Raumschaltmatrix (53) verbunden sind, und
einen zweiten Sternkoppler (54), eine Vielzahl von Kopplereingängen umfassend, die sämtlich mit einem zweiten Teilsatz der netzwerkseitigen Ports der ersten optischen Raumschaltmatrix (53) verbunden sind, und
einen zweiten Empfängerblock (50), umfassend:
eine zweite Vielzahl optischer Sender (51), jeder von ihnen ausgelegt für das Generieren eines optischen Signals auf einem ausgewählten Wellenlängenkanal,
eine zweite optische Raumschaltmatrix (53), die eine Vielzahl transponderseitiger Anschlüsse, umfasst, die mit der zweiten Vielzahl optischer Sender(1) verbunden sind, und eine Vielzahl netzwerkseitiger Anschlüsse, wobei die optische Raumschaltmatrix ausgelegt ist für das Produzieren einer Vielzahl optischer Pfade in Funktion eines Konfigurationsstatus, wobei jeder optische Pfad ausgelegt ist für das Tragen optischer Signale auf der Vielzahl von Wellenlängenkanälen zwischen einem ausgewählten der transponderseitigen Ports und einem ausgewählten der netzwerkseitigen Ports,
einen dritten Sternkoppler (54), eine Vielzahl von Kopplereingängen umfassend, die sämtlich mit einem ersten Teilsatz der netzwerkseitigen Ports der zweiten optischen Raumschaltmatrix verbunden sind, und
einen vierten Sternkoppler (54), eine Vielzahl von Kopplereingängen umfassend, die sämtlich mit einem zweiten Teilsatz der netzwerkseitigen Ports der zweiten optischen Raumschaltmatrix verbunden sind,
**dadurch gekennzeichnet, dass**:
der erste Sternkoppler (54) eine Vielzahl von Kopplerausgängen umfasst, von denen ein erster Kopplerausgang mit dem ersten programmierbaren Multiplexer und ein zweiter Kopplerausgang mit dem zweiten programmierbaren Multiplexer verbunden ist,
der zweite Sternkoppler (54) eine Vielzahl von Kopplerausgängen umfasst, von denen ein erster Kopplerausgang mit dem ersten programmierbaren Multiplexer und ein zweiter Kopplerausgang mit dem zweiten programmierbaren Multiplexer verbunden ist,
der dritte Sternkoppler eine Vielzahl von Kopplerausgängen umfasst, von denen ein erster Kopplerausgang mit dem ersten programmierbaren Multiplexer und ein zweiter Kopplerausgang mit dem zweiten programmierbaren Multiplexer verbunden ist,
der vierte Sternkoppler eine Vielzahl von Kopplerausgängen umfasst, von denen ein erster Kopplerausgang mit dem ersten programmierbaren Multiplexer und ein zweiter Kopplerausgang mit dem zweiten programmierbaren Multiplexer verbunden ist,
wobei der erste programmierbare Multiplexer ausgelegt ist für das Weiterleiten solcher optischer Signale an den ersten WDM-Ausgang, die in Funktion der Wellenlänge aus den optischen Signalen ausgewählt wurden, die vom ersten Sternkoppler (54), dem zweiten Sternkoppler (54), dem dritten Sternkoppler (54) und dem vierten Sternkoppler (54) empfangen wurden, und
wobei der zweite programmierbare Multiplexer ausgelegt ist für das Weiterleiten solcher optischer Signale an den zweiten WDM-Ausgang, die in Funktion der Wellenlänge aus den optischen Signalen ausgewählt wurden, die vom ersten Sternkoppler (54), dem zweiten Sternkoppler (54), dem dritten Sternkoppler (54) und dem vierten Sternkoppler (54) empfangen wurden.

8. Multidirektionale Add-Vorrichtung nach Anspruch 7, wobei einer der programmierbaren Demultiplexer einen ersten wellenlängenselektiven Schalter (130) und einen zweiten wellenlängenselektiven Schalter (230) umfasst, die parallel oder kaskadiert angeordnet sind, dergestalt, dass am ersten WDM-Eingang die vom ersten wellenlängenselektiven Schalter (130) und vom zweiten wellenlängenselektiven Schalter (230) weitergeleiteten optischen Signale zusammengeführt werden.
wobei die Sternkoppler eines ersten Teilsatzes aus dem ersten Sternkoppler (4), dem zweiten Sternkoppler (4), dem dritten Sternkoppler (4) und dem vierten Sternkoppler (4) jeweils mit dem ersten wellenlängenselektiven Schalter (120) verbunden sind, damit der erste wellenlängenselektive Schalter optische Signale in Funktion einer Wellenlänge aus den optischen Signalen weiterleiten kann, die vom ersten Teilsatz der Sternkoppler (4) empfangen werden,
wobei die Sternkoppler des zweiten, zum ersten Teilsatz disjunktiven Teilsatzes aus dem ersten Sternkoppler (4), dem zweiten Sternkoppler (4), dem dritten Sternkoppler (4) und dem vierten Sternkoppler (4) jeweils mit dem zweiten wellenlängenselektiven Schalter (220) verbunden sind, damit der zweite wellenlängenselektive Schalter optische Signale in Funktion einer Wellenlänge aus den optischen Signalen weiterleiten kann, die vom zweiten Teilsatz der Sternkoppler empfangen werden,

9. Multidirektionale Add-Vorrichtung nach einem der Ansprüche 7 bis 8, wobei eine Anzahl von Sternkopplern (54) in einem Senderblock (50) größer oder gleich der Anzahl der WDM-Ausgänge (11) des optischen Netzwerkelements ist.

10. Optischer Schaltknoten, eine multidirektionale Add-Vorrichtung nach einem der Ansprüche 7 bis 9 umfassend, wobei der optische Schaltknoten weiterhin umfasst:
einen ersten WDM-Eingang (10), der ausgelegt ist für den Empfang optischer Signale auf der Vielzahl von Wellenlängenkanälen von dem ersten angrenzenden Knoten des Netzwerks,
einen zweiten WDM-Eingang (10), der ausgelegt ist für den Empfang optischer Signale auf der Vielzahl von Wellenlängenkanälen von dem zweiten angrenzenden Knoten des Netzwerks,
eine erste Transitleitung (31), welche den ersten WDM-Eingang mit dem zweiten programmierbaren Multiplexer verbindet, und
eine zweite Transitleitung (31), welche den zweiten WDM-Eingang mit dem ersten programmierbaren Multiplexer verbindet,
wobei der erste programmierbare Multiplexer ausgelegt ist für das Weiterleiten solcher optischer Signale an den ersten WDM-Ausgang, die in Funktion der Wellenlänge aus den optischen Signalen ausgewählt wurden, die von der zweiten Transitleitung (31), vom ersten Sternkoppler (54), dem zweiten Sternkoppler (54), dem dritten Sternkoppler (54) und dem vierten Sternkoppler (54) empfangen wurden, und
wobei der zweite programmierbare Multiplexer ausgelegt ist für das Weiterleiten solcher optischer Signale an den zweiten WDM-Ausgang, die in Funktion der Wellenlänge aus den optischen Signalen ausgewählt wurden, die von der ersten Transitleitung (31), vom ersten Sternkoppler (54), dem zweiten Sternkoppler (54), dem dritten Sternkoppler (54) und dem vierten Sternkoppler (54) empfangen wurden.

11. Multidirektionale Add- oder Drop-Vorrichtung nach einem der Ansprüche 1 bis 5 und 7 bis 10, wobei ein Sternkoppler (4, 54) einen optischen Breitbandverstärker (7) umfasst, der zwischen den Kopplereingängen (6) und den Kopplerausgängen (5) angeordnet ist.

## Revendications

1. Dispositif d'extraction multidirectionnel destiné à un élément de réseau optique WDM (100, 200), comprenant :
une première entrée WDM (10) adaptée pour recevoir des signaux optiques sur une pluralité de canaux de longueurs d'onde en provenance d'un premier noeud adjacent du réseau,
une deuxième entrée WDM (10) adaptée pour recevoir des signaux optiques sur la pluralité de canaux de langueurs d'onde en provenance d'un deuxième noeud adjacent du réseau, un premier démultiplexeur programmable (20, 120, 220) associé à la première entrée WDM, un deuxième démultiplexeur programmable (20, 120, 220) associé à la deuxième entrée WDM,
un premier bloc récepteur (40) comprenant :
une première pluralité de récepteurs optiques (1) adaptés chacun pour démoduler un signal optique sur un canal de longueur d'onde sélectionné,
une première matrice de commutation optique spatiale (3) comprenant une pluralité de ports côté transpondeur connectés aux récepteurs optiques (1) et une pluralité de ports côté réseau, dans laquelle la première matrice de commutation optique spatiale est adaptée pour produire une pluralité de chemins optiques en fonction d'un état de configuration, chaque chemin optique étant adapté pour acheminer des signaux optiques sur la pluralité de canaux de longueur d'onde entre un port sélectionné parmi les ports côté transpondeur et un port sélectionné parmi les ports côté réseau,
un premier coupleur en étoile (4) comprenant une pluralité de sorties de coupleur (5) toutes connectées à un premier sous-ensemble des ports côté réseau de la première matrice de commutation optique spatiale (3), et
un deuxième coupleur en étoile (4) comprenant une pluralité de sorties de coupleur (5) toutes connectées à un deuxième sous-ensemble des ports côté réseau de la première matrice de commutation optique spatiale (3), et
un deuxième bloc récepteur (40) comprenant :
une deuxième pluralité de récepteurs optiques (1) adaptés chacun pour démoduler un signal optique sur un canal de longueur d'onde sélectionné,
une deuxième matrice de commutation optique spatiale (3) comprenant une pluralité de ports côté transpondeur connectés à la deuxième pluralité de récepteurs optiques (1) et une pluralité de ports côté réseau, dans laquelle la deuxième matrice de commutation optique spatiale est adaptée pour produire une pluralité de chemins optiques en fonction d'un état de configuration, chaque chemin optique étant adapté pour acheminer des signaux optiques sur la pluralité de canaux de longueur d'onde entre un port sélectionné parmi les ports côté transpondeur et un port sélectionné parmi les ports côté réseau,
un troisième coupleur en étoile (4) comprenant une pluralité de sorties de coupleur toutes connectées à un premier sous-ensemble des ports côté réseau de la deuxième matrice de commutation optique spatiale (3), et
un quatrième coupleur en étoile (4) comprenant une pluralité de sorties de coupleur toutes connectées à un deuxième sous-ensemble des ports côté réseau de la deuxième matrice de commutation optique spatiale (3),
**caractérisé en ce que** :
le premier coupleur en étoile comprend une pluralité d'entrées de coupleur, parmi lesquelles une première entrée de coupleur (6) est connectée au premier démultiplexeur programmable (20, 120, 220) et une deuxième entrée de coupleur (6) est connectée au deuxième démultiplexeur programmable,
le deuxième coupleur en étoile comprend une pluralité d'entrées de coupleur, parmi lesquelles une première entrée de coupleur est connectée au premier démultiplexeur programmable et une deuxième entrée de coupleur est connectée au deuxième démultiplexeur programmable,
le troisième coupleur en étoile comprend une pluralité d'entrées de coupleur, parmi lesquelles une première entrée de coupleur est connectée au premier démultiplexeur programmable et une deuxième entrée de coupleur est connectée au deuxième démultiplexeur programmable,
le quatrième coupleur en étoile comprend une pluralité d'entrées de coupleur, parmi lesquelles une première entrée de coupleur est connectée au premier démultiplexeur programmable et une deuxième entrée de coupleur est connectée au deuxième démultiplexeur programmable,
dans lequel le premier démultiplexeur programmable (20, 120, 220) est adapté pour transmettre à chacun des coupleurs parmi le premier coupleur en étoile (4), le deuxième coupleur en étoile (4), le troisième coupleur en étoile (4) et le quatrième coupleur en étoile (4) des signaux optiques sélectionnés en fonction de la longueur d'onde parmi les signaux optiques reçus de la première entrée WDM, et
dans lequel le deuxième démultiplexeur programmable (20, 120, 220) est adapté pour transmettre à chacun des coupleurs parmi le premier coupleur en étoile (4), le deuxième coupleur en étoile (4), le troisième coupleur en étoile (4) et le quatrième coupleur en étoile (4) des signaux optiques sélectionnés en fonction de la longueur d'onde parmi les signaux optiques reçus de la deuxième entrée WDM.

2. Dispositif d'extraction multidirectionnel selon la revendication 1, dans lequel l'un des démultiplexeurs programmables comprend un premier commutateur sélectif en longueur d'onde (120) et un deuxième commutateur sélectif en longueur d'onde (220) disposés en parallèle ou en cascade de sorte que les signaux optiques reçus sur la première entrée WDM sont distribués à la fois au premier commutateur sélectif en longueur d'onde (120) et au deuxième commutateur sélectif en longueur d'onde (220),
dans lequel les éléments d'un premier sous-ensemble comprenant le premier coupleur en étoile (4), le deuxième coupleur en étoile (4), le troisième coupleur en étoile (4) et le quatrième coupleur en étoile (4) sont connectés chacun au premier commutateur sélectif en longueur d'onde (120) pour recevoir des signaux optiques sélectionnés par le premier commutateur sélectif en longueur d'onde en fonction de la longueur d'onde parmi les signaux optiques reçus de la première entrée WDM,
dans lequel les éléments d'un deuxième sous-ensemble comprenant le premier coupleur en étoile (4), le deuxième coupleur en étoile (4), le troisième coupleur en étoile (4) et le quatrième coupleur en étoile (4), disjoint du premier sous-ensemble, sont connectés chacun au deuxième commutateur sélectif en longueur d'onde (220) pour recevoir des signaux optiques sélectionnés par le deuxième commutateur sélectif en longueur d'onde en fonction de la longueur d'onde parmi les signaux optiques reçus de la première entrée WDM.

3. Dispositif d'extraction multidirectionnel selon l'une des revendications 1 à 2, dans lequel le nombre de coupleurs en étoile (4) dans un bloc récepteur (40) est supérieur ou égal au nombre des entrées WDM (10) de l'élément de réseau optique (100, 200, 300).

4. Dispositif d'extraction multidirectionnel selon l'une des revendications 1 à 3, dans lequel les récepteurs optiques (1) comprennent des récepteurs optiques cohérents.

5. Dispositif d'extraction multidirectionnel selon l'une des revendications 1 à 4, dans lequel les récepteurs optiques (1) comprennent des récepteurs optiques quadratiques associés chacun à un filtre optique réglable en longueur d'onde (2).

6. Noeud de commutation optique comprenant un dispositif d'extraction multidirectionnel selon l'une des revendications 1 à 5, le noeud de commutation optique comprenant en outre :
une première sortie WDM (11) adaptée pour transmettre des signaux optiques sur la pluralité de canaux de longueur d'onde au premier noeud adjacent du réseau,
une deuxième sortie WDM (11) adaptée pour transmettre des signaux optiques sur la pluralité de canaux de longueur d'onde au deuxième noeud adjacent du réseau,
une première ligne de transit (31) connectant le premier démultiplexeur programmable à la deuxième sortie WDM, et
une deuxième ligne de transit (31) connectant le deuxième démultiplexeur programmable à la première sortie WDM,
dans lequel le premier démultiplexeur programmable (20) est adapté pour transmettre à chaque élément parmi la première ligne de transit (31), le premier coupleur en étoile (4), le deuxième coupleur en étoile (4), le troisième coupleur en étoile (4) et le quatrième coupleur en étoile (4) des signaux optiques sélectionnés en fonction de la longueur d'onde parmi les signaux optiques reçus de la première entrée WDM, et
dans lequel le deuxième démultiplexeur programmable (20) est adapté pour transmettre à chaque élément parmi la deuxième ligne de transit (31), le premier coupleur en étoile (4), le deuxième coupleur en étoile (4), le troisième coupleur en étoile (4) et le quatrième coupleur en étoile (4) des signaux optiques sélectionnés en fonction de la longueur d'onde parmi les signaux optiques reçus de la deuxième entrée WDM.

7. Dispositif d'insertion multidirectionnel destiné à un élément de réseau optique WDM (100, 200) comprenant :
une première sortie WDM (11) adaptée pour transmettre des signaux optiques sur une pluralité de canaux de longueur d'onde à un premier noeud adjacent du réseau,
une deuxième sortie WDM (11) adaptée pour transmettre des signaux optiques sur une pluralité de canaux de longueur d'onde à un deuxième noeud adjacent du réseau,
un premier multiplexeur programmable (30, 130) associé à la première sortie WDM,
un deuxième multiplexeur programmable (30, 130) associé à la deuxième sortie WDM,
un premier bloc émetteur (50) comprenant :
une pluralité d'émetteurs optiques (51) adaptés chacun pour générer un signal optique sur un canal de longueur d'onde sélectionné,
une première matrice de commutation optique spatiale (53) comprenant une pluralité de ports côté transpondeur connectés aux émetteurs optiques et une pluralité de ports côté réseau, dans laquelle la première matrice de commutation optique spatiale est adaptée pour produire une pluralité de chemins optiques en fonction d'un état de configuration, chaque chemin optique étant adapté pour acheminer des signaux optiques sur la pluralité de canaux de longueur d'onde entre un port sélectionné parmi les ports côté transpondeur et un port sélectionné parmi les ports côté réseau,
un premier coupleur en étoile (54) comprenant une pluralité d'entrées de coupleur toutes connectées à un premier sous-ensemble des ports côté réseau de la première matrice de commutation optique spatiale (53), et
un deuxième coupleur en étoile (54) comprenant une pluralité d'entrées de coupleur toutes connectées à un deuxième sous-ensemble des ports côté réseau de la première matrice de commutation optique spatiale (53), et
un deuxième bloc émetteur (50) comprenant :
une deuxième pluralité d'émetteurs optiques (51) adaptés chacun pour générer un signal optique sur un canal de longueur d'onde sélectionné,
une deuxième matrice de commutation optique spatiale (53) comprenant une pluralité de ports côté transpondeur connectés à la deuxième pluralité d'émetteurs optiques (1) et une pluralité de ports côté réseau, dans laquelle la matrice de commutation optique spatiale est adaptée pour produire une pluralité de chemins optiques en fonction d'un état de configuration, chaque chemin optique étant adapté pour acheminer des signaux optiques sur la pluralité de canaux de longueur d'onde entre un port sélectionné parmi les ports côté transpondeur et un port sélectionné parmi les ports côté réseau,
un troisième coupleur en étoile (54) comprenant une pluralité d'entrées de coupleur toutes connectées à un premier sous-ensemble des ports côté réseau de la deuxième matrice de commutation optique spatiale (53), et
un quatrième coupleur en étoile (54) comprenant une pluralité d'entrées de coupleur toutes connectées à un deuxième sous-ensemble des ports côté réseau de la deuxième matrice de commutation optique spatiale (53),
**caractérisé en ce que** :
le premier coupleur en étoile (54) comprend une pluralité de sorties de coupleur, parmi lesquelles une première sortie de coupleur est connectée au premier multiplexeur programmable et une deuxième sortie de coupleur est connectée au deuxième multiplexeur programmable,
le deuxième coupleur en étoile (54) comprend une pluralité de sorties de coupleur, parmi lesquelles une première sortie de coupleur est connectée au premier multiplexeur programmable et une deuxième sortie de coupleur est connectée au deuxième multiplexeur programmable,
le troisième coupleur en étoile comprend une pluralité de sorties de coupleur, parmi lesquelles une première sortie de coupleur est connectée au premier multiplexeur programmable et une deuxième sortie de coupleur est connectée au deuxième multiplexeur programmable,
le quatrième coupleur en étoile comprend une pluralité de sorties de coupleur, parmi lesquelles une première sortie de coupleur est connectée au premier multiplexeur programmable et une deuxième sortie de coupleur est connectée au deuxième multiplexeur programmable,
dans lequel le premier multiplexeur programmable est adapté pour transmettre à la première sortie WDM des signaux optiques sélectionnés en fonction de la longueur d'onde parmi les signaux optiques reçus du premier coupleur en étoile (54), du deuxième coupleur en étoile (54), du troisième coupleur en étoile (54) et du quatrième coupleur en étoile (54), et
dans lequel le deuxième multiplexeur programmable est adapté pour transmettre à la deuxième sortie WDM des signaux optiques sélectionnés en fonction de la longueur d'onde parmi les signaux optiques reçus du premier coupleur en étoile (54), du deuxième coupleur en étoile (54), du troisième coupleur en étoile (54) et du quatrième coupleur en étoile (54).

8. Dispositif d'insertion multidirectionnel selon la revendication 7, dans lequel l'un des démultiplexeurs programmables comprend un premier commutateur sélectif en longueur d'onde (130) et un deuxième commutateur sélectif en longueur d'onde (230) disposés en parallèle ou en cascade de sorte à fusionner au niveau de la première sortie WDM les signaux optiques transmis par le premier commutateur sélectif en longueur d'onde (130) et le deuxième commutateur sélectif en longueur d'onde (230),
dans lequel les éléments d'un premier sous-ensemble comprenant le premier coupleur en étoile (4), le deuxième coupleur en étoile (4), le troisième coupleur en étoile (4) et le quatrième coupleur en étoile (4) sont connectés chacun au premier commutateur sélectif en longueur d'onde (120) pour que le premier commutateur sélectif en longueur d'onde transmette les signaux optiques sélectionnés en fonction de la longueur d'onde parmi les signaux optiques reçus du premier sous-ensemble de coupleurs en étoile,
dans lequel les éléments d'un deuxième sous-ensemble comprenant le premier coupleur en étoile (4), le deuxième coupleur en étoile (4), le troisième coupleur en étoile (4) et le quatrième coupleur en étoile (4), disjoint du premier sous-ensemble, sont connectés chacun au deuxième commutateur sélectif en longueur d'onde (220) pour que le deuxième commutateur sélectif en longueur d'onde transmette les signaux optiques sélectionnés en fonction de la longueur d'onde parmi les signaux optiques reçus du deuxième sous-ensemble de coupleurs en étoile.

9. Dispositif d'insertion multidirectionnel selon l'une des revendications 7 à 8, dans lequel le nombre des coupleurs en étoile (54) dans un bloc émetteur (50) est supérieur ou égal au nombre des sorties WDM (11) de l'élément de réseau optique.

10. Noeud de commutation optique comprenant un dispositif d'insertion multidirectionnel selon l'une des revendications 7 à 9, le noeud de commutation optique comprenant en outre :
une première entrée WDM (10) adaptée pour recevoir des signaux optiques sur la pluralité de canaux de longueur d'onde en provenance du premier noeud adjacent du réseau,
une deuxième entrée WDM (10) adaptée pour recevoir des signaux optiques sur la pluralité de canaux de longueur d'onde en provenance du deuxième noeud adjacent du réseau,
une première ligne de transit (31) connectant la première entrée WDM au deuxième multiplexeur programmable,
une deuxième ligne de transit (31) connectant la deuxième entrée WDM au premier multiplexeur programmable,
dans lequel le premier multiplexeur programmable est adapté pour transmettre à la première sortie WDM des signaux optiques sélectionnés en fonction de la longueur d'onde parmi les signaux optiques reçus de la deuxième ligne de transit (31), du premier coupleur en étoile (54), du deuxième coupleur en étoile (54), du troisième coupleur en étoile (54) et du quatrième coupleur en étoile (54), et
dans lequel le deuxième multiplexeur programmable est adapté pour transmettre à la deuxième sortie WDM des signaux optiques sélectionnés en fonction de la longueur d'onde parmi les signaux optiques reçus de la première ligne de transit (31), du premier coupleur en étoile (54), du deuxième coupleur en étoile (54), du troisième coupleur en étoile (54) et du quatrième coupleur en étoile (54).

11. Dispositif d'insertion ou d'extraction multidirectionnel selon l'une des revendications 1 à 5 et 7 à 10, dans lequel un coupleur en étoile (4, 54) comprend un amplificateur optique large bande (7) disposé entre les entrées du coupleur (6) et les sorties du coupleur (5).
